Europäisches Patentamt

European Patent Office

Office européen des brevets

(19)

(11) Publication number: **0 173 985**
**A1**

(12) # EUROPEAN PATENT APPLICATION

(21) Application number: **85110982.7**

(22) Date of filing: **30.08.85**

(51) Int. Cl.⁴: **H 02 B 1/02**

(30) Priority: **31.08.84 DK 4168/84**

(43) Date of publication of application:
**12.03.86 Bulletin 86/11**

(84) Designated Contracting States:
**AT BE CH DE FR GB LI LU NL SE**

(71) Applicant: **Aktieselskabet Laur. Knudsen Nordisk
Elektricitets Selskab
Haraldsgade 53
DK-2100 Kopenhagen O(DK)**

(72) Inventor: **Petersen, Arne
Mellemvej 23
DK-2750 Ballerup(DK)**

(72) Inventor: **Heintzelmann, Soren
Asmundshoj 419
DK-3480 Fredensborg(DK)**

(74) Representative: **Vossius Vossius Tauchner Heunemann
Rauh
Siebertstrasse 4 P.O. Box 86 07 67
D-8000 München 86(DE)**

(54) **A mounting member for mounting building blocks.**

(57) A mounting member to be mounted at a predetermined depth in an electric distributor system interconnects a front frame and a rear frame, said member merely being clipped into position. A mounting plate may be situated at the predetermined depth by nuts (5) corresponding to the predetermined depth being retracted from the body of the mounting member (4). The mounting is completed by screws being screwed through the mounting plate directly into the retracted nuts.

Fig.2.

EP 0 173 985 A1

Copenhagen, Denmark
Case: 55468 OC/AnP

SIEHERISTR. 4, 8000 MÜNCHEN 86
TEL (089) 47 40 75

0173985

3 0. AUG. 1985

1

# A mounting member for mounting building blocks.

The invention relates to a mounting member for mounting building blocks at a predetermined depth within a cabinet comprising bearing rails provided with system holes.

Electric distributor systems for industrial use are often built in cabinets whereby the current-collecting rails and the cables for the in- and outlets are situated at the rear of the cabinet and whereby the distributing, interrupting, and protecting components are situated adjacent the doors protecting against touch and dust. Bolt connections often appear in traditional cabinets being provided with bearing rails both in the horizontal and in the vertical direction, supporting iron profiles being bolted onto said bearing rails. A cabinet comprising a front and a rear frame may be provided with such iron profiles interconnecting said frames. In turn these iron profiles may carry rails therebetween, said rails being provided with building blocks or components, or as an alternative with carrying plates for groups of building blocks or components. It is obvious that such structures involve a great number of bolt connections, and in order to solve this problem it has been suggested to use rails provided with system holes together with particular fastening means, cf. Danish patent application No. 1074/84. However, such bolt connections involve much time and are consequently expensive to use both at the original mounting and at later alterations of existing structures. Especially when altering the control and protecting components as a consequence of the current development within the field these bolt connections cause great interruptions in the current supply.

The object of the invention is to provide a supporting iron profile, i.e. a mounting member, ensuring an improvement of the mounting time involved relative to the prior art. This object is achieved by means of the mounting member according to the invention which is characterised in that both ends of the member is shaped with engaging claws which in the completely mounted position secure against a pulling out in directions perpendicular to the planes of the carrying rails, and that retractable nuts are shaped integral with the mounting member in positions corresponding to the mounting depth of usual building blocks.

An embodiment of the engaging claws has been described in claim 2, said embodiment securing against a pulling out during the mounting procedure too.

An embodiment of the retractable claws has been described in claim 3, said embodiment increasing the ease of achieving a screw connection.

The invention will be described below with reference to the accompanying drawing, in which

Figure 1 illustrates two carrying rails provided with the mounting member according to the invention,

Figure 2 illustrates one end of the mounting member according to the invention, whereby especially the particular embodiment of an engaging claw described in claim 2 appears, and

3

Figure 3 illustrates one end of the mounting member provided with a retracted nut and a guiding cone according to claim 3.

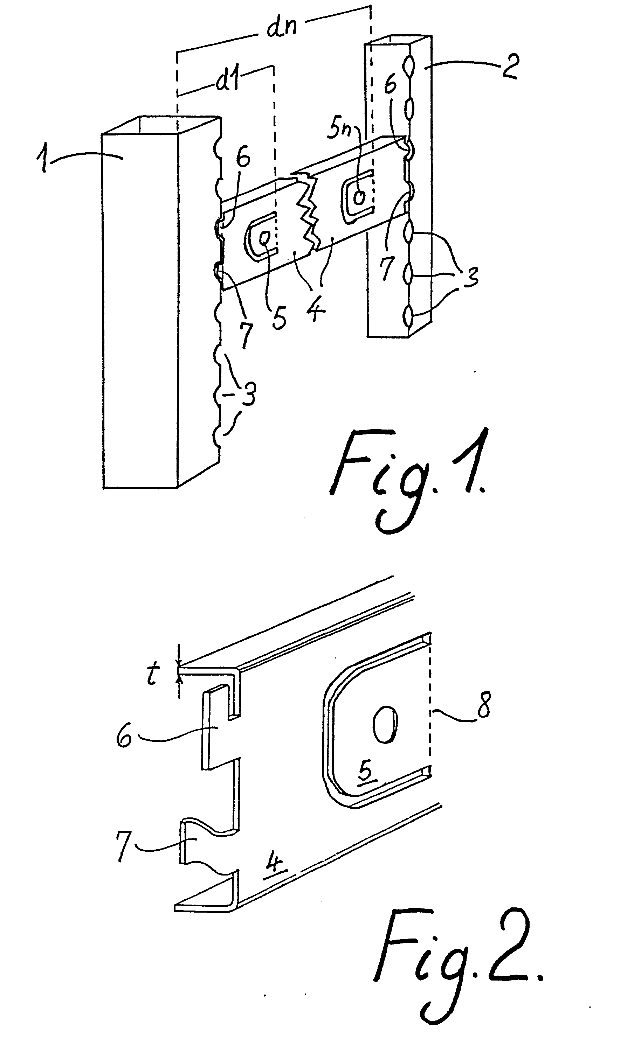

Figure 1 illustrates a carrying rail 1 of the front frame of an electric distribution system shaped as a cabinet and a carrying rail 2 associated with the rear frame. Both carrying rails are shaped as rectangular tubes provided with system holes 3 at all edges. For the sake of clarity the Figure only includes the system holes used for the mounting member 4 illustrated and with the orientation indicated in the drawing. The mounting member 4 illustrated has been stamped with retracted nuts 5 and $5n$ situated at the depths $d1$ and $dn$ from the front edge. The mounting member is used in the following manner: Two mounting members are used, i.e. one in the right and one in the left side of the cabinet corresponding to the one situated in the left side of Figure 1. The mounting members are always situated at heights corresponding to the mounting plate to be situated between the mounting members or in such a manner that the auxiliary carrying rail to be situated therebetween parallel to the front frame is horizontally positioned. The use of a mounting plate involves the use of four mounting members. The engaging claws 6 and 7 are according to claim 1 merely webs bent perpendicular to the plane of the member and which are capable of extending into the system holes. In this manner the members for the left and the right side are identical as they can merely be turned. After the nuts at the desired depth have been retracted, screws extending through holes in the auxiliary carrying rails or the mount-

ing plate are able to provide a connection between said carrying rails and the mounting members, whereby a pulling out of the mounting members from the holes 3 is impossible.

Unlike the embodiments described in claim 1 comprising four identical engaging claws, i.e. both the uppermost and the lowermost claws 7 are identical, the embodiment described in claim 2 and shown in Figure 2 comprises claws, where the uppermost claws 6 are mutually identical and the lowermost claws 7 are mutually identical too. The mounting member of Figure 2 is used slightly different than the member of Figure 1 as the first-mentioned member must be kept inclined in such a manner that the claws 6 are able to engage the holes 3 before the slightly curved and consequently slightly resilient claws 7 are pressed into the holes situated therebelow. In this manner the mounting member is able to resist mechanical effects before the final mounting with the mounting plate, i.e. when subjected to a pulling out of the engagement. According to a simple modification of the above embodiment the claws 7 are shaped in such a manner that some of the claws flexibly engage the inner side of the carrying rail 1. Subsequently it is necessary to use tools for pressing the claw 7 in a disengaging direction provided the mounting member 4 is to be removed from its position. Figure 2 also shows the retractable nut 5 being correctly positioned, i.e. retracted about the vertical axis 8. During the mounting it is possible to reduce the force by weakening the thickness of the material $t$ along the axis 8 through a stamping or a direct removal of the material.

5

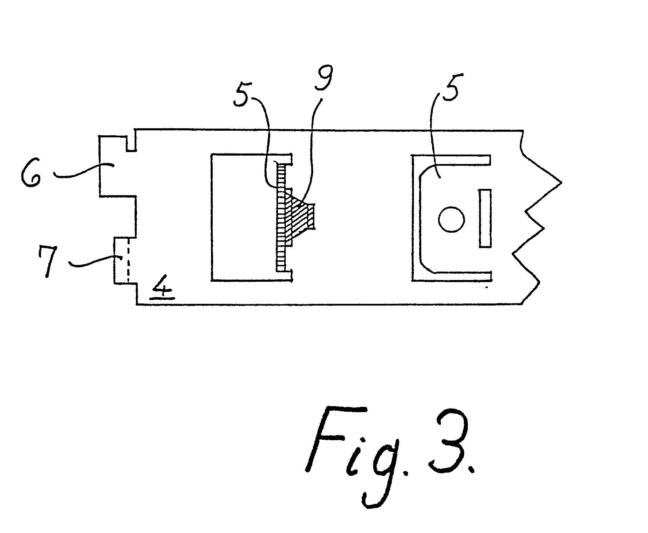

Figure 3 illustrates an embodiment of the invention described in claim 3. A nut is retracted in such a manner that the guiding cone 9 is shaped through a stamping in the sheet material in the same operation as the C-shaped figure is stamped which has been clearly illustrated. Experience has taught that such a guiding cone simplifies the mounting of a mounting plate on the mounting members to a high degree, the latter procedure only necessitating the positioning of a screw on a screwdriver with a magnetic sword or a Parker's screwdriver, whereafter it can be mounted and tightened in one operation by turning.

The mounting member according to the invention provides a component for constructing electric distributor systems presenting a saving as to storage numbers and a high simplification of the mounting both at an original mounting and at a later alteration of existing systems.

6

claims:

1. A mounting member for mounting building blocks at a predetermined depth ($d_1$, $d_n$) in a cabinet comprising carrying rails (1, 2) provided with system holes, characterised in that both ends of the mounting member (4) is provided with engaging claws (6, 7), which in the completely mounted state secure against a pulling out in directions perpendicular to the planes of the carrying rails, and that retractable nuts (5, $5_n$) are shaped integral with the mounting member (4) in positions corresponding to the mounting depths of usual building blocks.

2. A mounting member as claimed in claim 1, characterised in that the engaging claws comprise an upward web (6) securing against a pulling out during the mounting procedure.

3. A mounting member as claimed in claim 1 or 2, characterised in that the retractable nuts (5, $5_n$) comprise guiding cones (9) shaped integral with the nut material.

0173985

$dn$

$d1$

1

6

$5n$

6

2

6

5

4

7

7

3

3

*Fig.1.*

$t$

6

7

4

5

8

*Fig.2.*

Fig. 3.

## DOCUMENTS CONSIDERED TO BE RELEVANT

EP 85110982.7

| Category | Citation of document with indication, where appropriate, of relevant passages | Relevant to claim | CLASSIFICATION OF THE APPLICATION (Int Cl 4) |
|---|---|---|---|
| A | <u>DE - B - 1 938 879</u> (SIEMENS)<br>* Totality *<br><br>-- | 1 | H 02 B 1/02<br>H 05 K 5/14 |
| A | <u>DE - B - 2 043 699</u> (SIEMENS)<br>* Totality *<br><br>-- | 1 | |
| A | <u>DE - A - 2 050 070</u> (ALOISWERK)<br>* Totality *<br><br>-- | 1 | |
| A | <u>EP - A2 - 0 077 885</u> (THYSSEN)<br>* Fig. 3; page 5, lines 7-22 *<br><br>---- | 1,2 | |

**TECHNICAL FIELDS SEARCHED (Int Cl 4)**

H 02 B 1/00
H 02 H 13/00
H 05 K 5/00
A 47 B 57/00

The present search report has been drawn up for all claims

| Place of search | Date of completion of the search | Examiner |
|---|---|---|
| VIENNA | 22-11-1985 | GERSTBACH |